# EUROPÄISCHE PATENTSCHRIFT

(11) **EP 1 582 098 B1**
(45) Veröffentlichungstag und Bekanntmachung des Hinweises auf die Patenterteilung: **13.06.2007**
(21) Anmeldenummer: 04007984.0
(22) Anmeldetag: 01.04.2004
(51) Int. Cl.: A22C 11/10, A22C 11/02

(54) **Vorrichtung und Verfahren zum Abteilen eines Wurststrangs**
Device and method for twisting extruded sausage strand
Procédé et dispositif pour diviser un chapelet de saucisses

(43) Veröffentlichungstag der Anmeldung: 05.10.2005
(73) Patentinhaber: Albert Handtmann Maschinenfabrik GmbH & Co. KG, 88400 Biberach (DE)
(72) Erfinder: Reuter, Siegfried, 88436 Eberhardzell (DE); Schliesser, Gerhard, 88489 Wain (DE); Schliesser, Markus, 88489 Wain (DE); Bächtle, Manfred, 88433 Schemmerhofen (DE)
(74) Vertreter: Grünecker, Kinkeldey, Stockmair & Schwanhäusser Anwaltssozietät

(56) Entgegenhaltungen:
- DE-A- 19 824 829
- DE-U- 9 211 979
- GB-A- 812 307
- US-A- 4 073 039
- US-A- 4 624 030

## Beschreibung

Die Erfindung betrifft eine Vorrichtung und ein Verfahren zum Abteilen eines Wurststrangs, insbesondere eines endlosen Wurststrangs mit koextrudierter Hülle, sowie eine Vorrichtung zur Wurstherstellung.

Bei der automatischen Wurstherstellung werden üblicherweise Füllmaschinen eingesetzt. Solche Füllmaschinen bringen Wurstbrät durch ein Füllrohr in eine Wursthülle ein. Die Wursthülle befindet sich dazu in gerafftem Zustand direkt auf dem Füllrohr oder in einer entsprechenden Hülse, die über das Füllrohr geschoben wird. Im Allgemeinen befindet sich am Ende des Füllrohrs eine sogenannte Darmbremse bzw. ein Bremsring. Nach dem Ausstoß einer Wurstbrätportion aus dem Füllrohr, die einer einzelnen Wurst entspricht, wird die Wursthülle mit Hilfe des Bremsringgetriebes und einer Abdrehvorrichtung abgedreht. Um das Wurstbrät durch das Füllrohr zu pressen, wird ein entsprechendes Füllorgan eingesetzt, das das Wurstbrät in das Füllrohr befördert. Eine solche Füllmaschine ist z.B. in der europäischen Patentanmeldung 0232 812 beschrieben. Das Wurstbrät kann intermittierend oder aber insbesondere im Zusammenhang mit einem Koextrudierverfahren kontinuierlich ausgestoßen werden. GB-A-812 307, offenbart eine Vorrichtung und ein Verfahren zum Abteilen eines Wurststrangs.

Auf dem Markt sind prinzipiell zwei Abdrehverfahren bekannt, die bei gleichzeitigem Füllen und Abdrehen Anwendung finden.

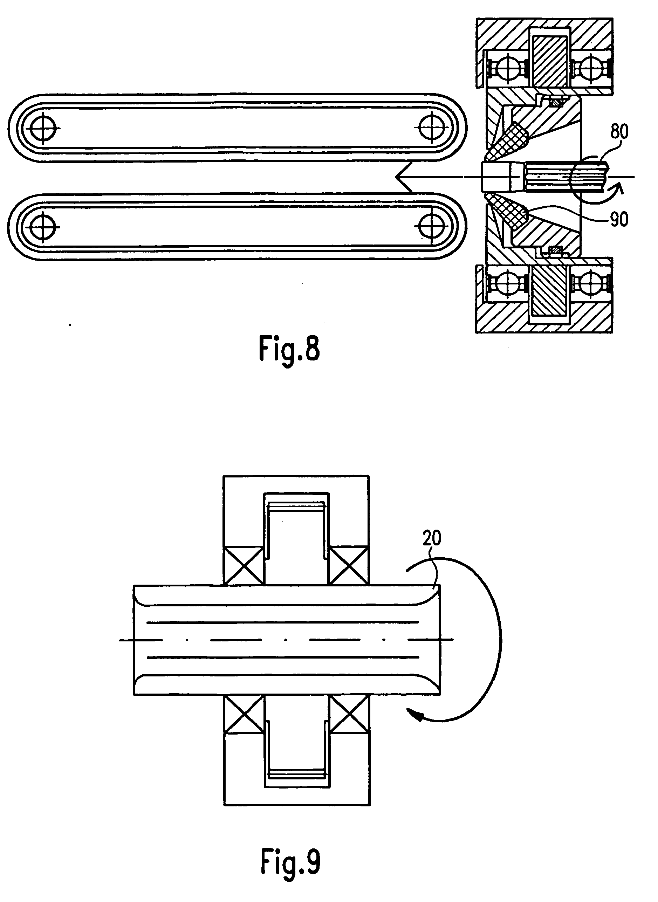

Wie in Figur 8 gezeigt ist, wird die Darmhülle und die Abdrehhülse unterstützt durch den Bremsgummi 90 gedreht. Bei diesem Verfahren wird die zwischen dem drehenden oder stehenden Bremsgummi 90 und der drehenden Fülltülle 80 befindliche Darmhülle verdreht. Um das Einspringen der Abdrehstelle im Wurststrang zu gewährleisten, muss die abzudrehende Wurst gleichzeitig gegen Verdrehen festgehalten werden. Ein Festhalten der Wurst kann manuell, durch Transportbänder, Transportketten, Rollen, Darmführungsrohr oder Längenportioniervorrichtung erfolgen.

Eine weitere Möglichkeit besteht darin, dass eine Abdrehhülse 20 gedreht wird, wie in Figur 9 gezeigt ist. Bei diesem Verfahren wird der bereits gefüllte Darm am Außendurchmesser mittels der Abdrehhülse 20 verdreht. Ebenfalls ist, wenn auch in Figur 9 nicht eigens dargestellt, ein Gegenhalten notwendig. Bei empfindlichen Wursthüllen ist es notwendig, dass die Fülltülle zusätzlich in Drehung versetzt wird.

Nachteilig bei den beiden Verfahren ist es, dass kaliberabhängige Formatteile, hier also Bremsgummi oder Abdrehhülse, benötigt werden.

Hiervon ausgehend liegt der vorliegenden Erfindung die Aufgabe zugrunde, ein verbessertes Verfahren und eine verbesserte Vorrichtung zum Abteilen eines Wurststrangs bereitzustellen, die keine kaliberabhängigen Formteile benötigen und somit ein einfaches Umrüsten der Vorrichtung auf unterschiedliche Kaliber ermöglichen, insbesondere bei endlosen Wurststrängen mit koextrudierter Hülle.

Erfindungsgemäß wird diese Aufgabe durch eine Vorrichtung zum Abteilen eines Wurststrangs gelöst mit mindestens zwei gegenüberliegenden voneinander beabstandeten Führungselementen, deren Abstand derart an ein Wurstkaliber anpassbar ist, dass sich der gefüllte Wurststrang zwischen den Führungselementen in Transportrichtung entlang einer ersten Achse hindurch bewegt und von den Führungselementen um die erste Achse verdreht werden kann, und mit einer Einrichtung zum gemeinsamen Verdrehen der Führungselemente um die erste Achse.

Die Aufgabe wird weiter durch ein Verfahren zum Abteilen eines Wurststrangs mit folgenden Schritten gelöst:
- Füllen eines Wurststrangs mit einem Füllrohr, einer Fülleinheit,
- Durchführen des gefüllten Wurststrangs in Transportrichtung durch mindestens zwei gegenüberliegende voneinander beabstandete Führungselemente, deren Abstand an das Wurstkaliber angepasst ist,
- Verdrehen der Führungselemente um eine erste Achse, die sich entlang der Transportrichtung erstreckt, wobei der gefüllte Wurststrang ebenfalls um die erste Achse verdreht wird und
- Gegenhalten des gefüllten Wurststrangs an einer Stelle in Transportrichtung hinter den Führungselementen, während der gefüllte Wurststrang um die erste Achse verdreht wird.

Die vorliegende Erfindung bringt den Vorteil mit sich, dass der gefüllte Wurststrang von mindestens zwei gegenüberliegenden voneinander beabstandeten Führungselementen, die gemeinsam um eine erste Achse verdreht werden, um die erste Achse verdreht wird. Der Abstand der beiden Führungselemente kann an ein bestimmtes Wurstkaliber angepasst werden, so dass ein einfaches Umrüsten möglich ist, ohne dass, wie im Stand der Technik, spezielle Formatteile, wie Bremsgummi oder Abdrehhülsen benötigt werden.

Gemäß einer bevorzugten Ausführungsform der vorliegenden Erfindung ist wenigstens ein Führungselement, vorzugsweise aber zwei sich gegenüberliegende Führungselemente senkrecht zur ersten Achse drehbar gelagert. Dies verringert den Reibungswiderstand zwischen gefülltem Wurststrang und Führungselementen in Transportrichtung wodurch auch extrem empfindliche Darmhüllen, d.h. z.B. auch koextrudierte Darmhüllen verwendet werden können. Beim Bewegen des gefüllten Wurststrangs in Transportrichtung, d.h. in Abzugsrichtung, können sich dann die Führungselemente mit dem gefüllten Wurststrang in Transportrichtung drehen.

Dies ermöglicht, dass selbst wenn der Abstand der Führungselemente zueinander kleiner als der Außendurchmesser des Wurststrangs eingestellt worden ist, damit der Wurststrang sicher am Außendurchmesser mittels der Führungselemente verdreht werden kann, sich der Wurststrang dennoch in Transportrichtung bewegen kann. Wenn der Abstand der Führungselemente zueinander kleiner als der Außendurchmesser des Wurststrangs eingestellt wird, besteht am Anfang des Strangs das Problem, dass der weiche Wurststrang nur schwer zwischen die Führungselemente (Rollen) einzufädeln ist, bzw. zurückgestaut wird. Deshalb sind die Führungselemente bei Beginn der Produktion zunächst etwas weiter einzustellen und nachdem der Wurststrang durch die Führungselemente durchgeführt ist, kann eine engere Einstellung wieder vorgenommen werden. Dies bringt jedoch mit sich, dass die Produktion nochmals unterbrochen werden muss, um die Einstellung zu verändern, und der Anfang des Wurststrangs wegen der veränderten Produktion nicht verwendet werden kann.

Gemäß der vorliegenden Erfindung kann die Vorrichtung daher weiter eine Einrichtung umfassen, die mindestens ein Führungselement mit Federkraft auf ein eingestelltes Kaliber hält. Vor dem Produktionsstart kann dann ein oder mehrere Führungselemente entgegen der Federkraft gespreizt und z.B. eingerastet werden. Nach dem Einfädeln des Wurststranges bei Produktionsbeginn wird diese Rastung, beispielsweise durch einen am Gehäuse befestigten Hebel aufgehoben und die Führungselemente springen wieder in die für das Wurstkaliber eingestellte Position, so dass keine Unterbrechung der Produktion nötig ist.

Dabei kann die Vorrichtung gemäß einer weiteren Ausführungsform noch weiter einen Antrieb für die Führungselemente umfassen, um mindestens eines der Führungselemente um die zweite Achse zu drehen. Auch so kann der Widerstand zwischen gefülltem Wurststrang und Führungselementen wesentlich reduziert werden, was, wie zuvor bereits beschrieben, auch den Einsatz von sehr empfindlichen Darmhüllen möglich macht. Des Weiteren können die angetriebenen Führungselemente dann als Transporteinrichtung verwendet werden, um den gefüllten Wurststrang bzw. die abgedrehten Würste in Transportrichtung zu fördern, so dass keine zusätzliche Transporteinrichtung mehr nötig ist.

Gemäß der vorliegenden Erfindung ist weiter eine Einrichtung zum Einstellen des Abstands der gegenüberliegenden Führungselemente zueinander und zum Zentrischen Ausrichten der gegenüberliegenden Führungselemente in Bezug auf das Füllrohr vorgesehen, so dass die Vorrichtung exakt zum Zentrum des Füllrohrs ausgerichtet werden kann und exakt an das Füllkaliber angepasst werden kann. Eine solche Einrichtung umfasst beispielsweise eine Verstellspindel zum Einstellen der Position der Führungselemente in Vertikalrichtung zueinander.

Vorzugsweise umfasst die Einrichtung zum Verdrehen der Führungselemente um die erste Achse eine angetriebene Hülse, die drehbar um die erste Achse gelagert ist und auf der die Führungselemente gegenüberliegend befestigt sind, so dass sie sich mit der Hülse um die erste Achse drehen.

Die Führungselemente sind beispielsweise Rollen und/oder umlaufende Transportbänder und/oder umlaufende Transportketten und/oder Gleitflächen, die z.B. einen niedrigen Reibungskoeffizienten aufweisen. Es sind auch mehrere in Reihe angeordnete Rollenpaare möglich.

Die Vorrichtung kann weiter eine Einrichtung zum Festhalten des gefüllten Wurststrangs umfassen, die in Transportrichtung hinter den Führungselementen angeordnet ist, um das Einspringen der Abdrehstelle nach den Führungselementen zu gewährleisten. In bekannter Weise sind zum Gegenhalten der Würste bekannte Systeme wie Transportband, Transportkette, drehbare Rollen oder manuelles Verfahren möglich. Die Einrichtung zum Festhalten des gefüllten Wurststrangs verhindert die weitere Drehung des Wurststrangs um die erste Achse. Die Vorrichtung kann weiter eine Verdrängereinheit mit Verdrängerelementen aufweisen. Außerdem kann die Vorrichtung weiter einen Koextrudierkopf zur Herstellung koextrudierter Wursthüllen umfassen, so dass die Hülle des Wurststrangs von einem Koextrudierkopf während des Füllens extrudiert wird. Vorteilhafterweise sind dann mindestens zwei voneinander beabstandete Vorrichtungen zum Abteilen eines Wurststrangs in Transportrichtung hintereinander angeordnet, die vorzugsweise synchron zueinander antreibbar sind. Somit ist gewährleistet, dass ein noch nicht ausgehärteter Wurststrang nicht abreißt, da dieser eine gewisse Strecke zum Aushärten braucht.

Bei der erfindungsgemäßen Vorrichtung zur Wurstherstellung kann das Füllrohr drehbar sein und dabei kann der Antrieb für das Füllrohr zu dem Antrieb der Einrichtung zum Drehen der Führungselemente synchronisiert sein.

Ebenso kann der Antrieb zum Verdrehen der Führungselemente um die erste Achse mit dem Antrieb zum Verdrehen der Führungselemente um die zweite Achse synchronisiert sein, um die erforderlichen Parameter, wie Wurstlänge und Abdrehzahl, entsprechend zu regeln.

Bei dem erfindungsgemäßen Verfahren wird der Abstand der Führungselemente erst größer als der Wurststrangdurchmesser eingestellt, dann das Wurststrangende durchgeführt, und dann der Abstand der Führungselemente kleiner als der Wurststrangdurchmesser eingestellt.

Nachfolgend wird die vorliegende Erfindung unter Bezugnahme der vorliegenden Figuren näher erläutert:
- Figur 1: zeigt eine schematische Seitenansicht eines Ausführungsbeispiels gemäß der vorliegenden Erfindung.
- Figur 2: zeigt die in der Figur 1 dargestellten Rollen von vorne.
- Figur 3: zeigt eine Draufsicht auf eine Vorrichtung zur Wurstherstellung gemäß der vorliegenden Erfindung.
- Figur 4: ist eine schematische Draufsicht auf eine Möglichkeit für den Antrieb der in Figur 1 gezeigten Rollen.
- Figur 5: ist eine Vorderansicht des in Figur 4 gezeigten Antriebs.
- Figur 6: zeigt schematisch eine Seitenansicht einer Vorrichtung zum Abteilen eines Wurststrangs gemäß einer zweiten Ausführungsform der vorliegenden Erfindung.
- Figur 7: zeigt schematisch eine Vorderansicht der in Figur 6 gezeigten Vorrichtung.
- Figur 8: ist eine schematische Seitenansicht einer Abdrehvorrichtung gemäß dem Stand der Technik.
- Figur 9: ist eine schematische Seitensicht einer Abdrehhülse gemäß dem Stand der Technik.
- Figur 10: zeigt eine schematische Darstellung eines Kettentransportsystems.
- Figur 11a: zeigt schematisch eine weitere Ausführungsform der Führungselemente gemäß der vorliegenden Erfindung mit Rollen im geschlossenen Zustand.
- Figur 11b: zeigt das in Figur 11a gezeigte Ausführungsbeispiel mit gespreizten Rollen.
- Figur 12a, b, c: zeigt schematisch eine Verdrängereinheit.
- Figur 13: zeigt perspektivisch eine Vorrichtung zur Wurstherstellung mit mehreren Führungselementen.

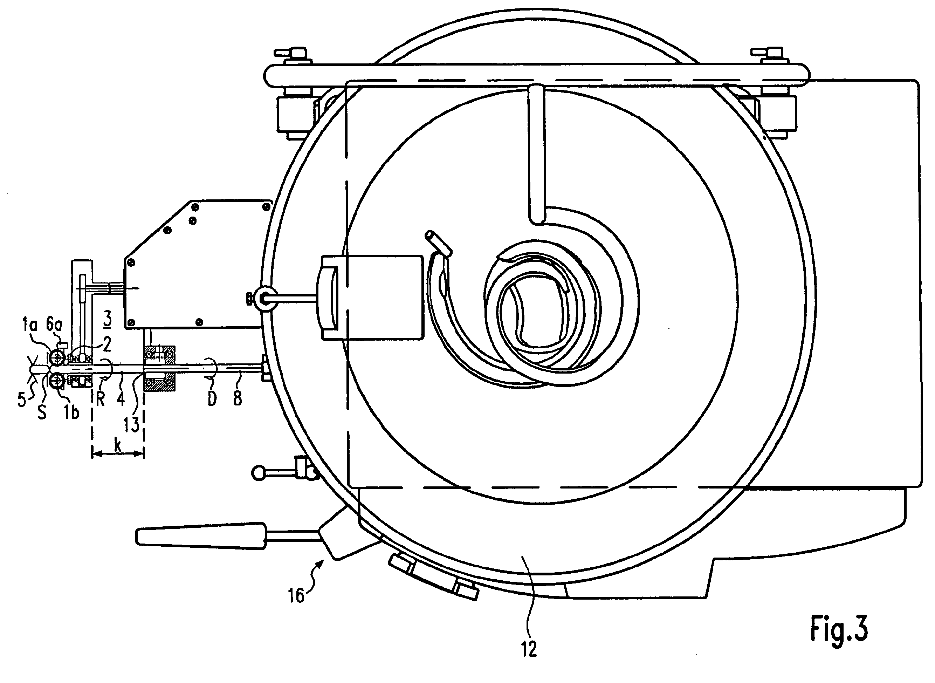

Figur 3 zeigt eine Vorrichtung zur Wurstherstellung gemäß der vorliegenden Erfindung. Die Vorrichtung zur Wurstherstellung weist eine Fülleinheit, hier Vakuumfüller 16 auf, die im Wesentlichen aus einem Trichter 12 für das Wurstbrät sowie ein vorzugsweise drehbar gelagertes Füllrohr 8 umfasst. Die Fülleinheit 16 umfasst weiter ein Füllorgan, z.B. eine nicht dargestellte Förderpumpe, die das Wurstbrät z.B. intermittierend oder kontinuierlich in das Füllrohr 8 fördert. In der Figur 3 ist ein Vakuumfüller mit Extrudierkopf 13 gezeigt. Der Extrudierkopf 13 weist mindestens eine vorzugsweise ringförmige Extrudierdüse auf und ist vorzugsweise fest mit dem Füllrohr verbunden und somit drehbar gelagert. Beim Koextrudieren wird gleichzeitig das Wurstbrät durch das Füllrohr 8 als Innenmasse und Hüllenmaterial als Außenmasse in Transportrichtung T zugeführt. Die exakte Funktion, der Aufbau und die Anordnung eines solchen Koextrudierkopfes ist beispielsweise in der EP 1371293 A1 beschrieben. Alternativ zum Extrudierkopf 13 kann auch wenn nicht explizit in den Figuren dargestellt ist, ein Vakuumfüller mit Bremsringgummi verwendet werden. Dabei wird nach Wegschwenken einer Rückhalteeinrichtung eine Darmhülle auf das Füllrohr 8 gestülpt.

Das in Transportrichtung gelegene Darmende ist verschlossen und der Darm wird dann über das Füllrohr 8 mit dem aus dem Trichter 12 geförderten Wurstbrät gefüllt. Im Abstand k zum vorderen Füllrohrende befindet sich dann die erfindungsgemäße Vorrichtung zum Abdrehen des Wurststrangs. Wird ein Bremsringgummi verwendet, so liegt der Abstand k in einem Bereich von 0 bis 100 mm, könnte jedoch auch größer sein. Bei koextrudierten Wursthüllen kann der Abstand bis ca. 3 m betragen, da die Wursthülle eine gewisse Zeit und bei kontinuierlicher Produktion deshalb eben auch eine gewisse Wegstrecke zum Aushärten benötigt.

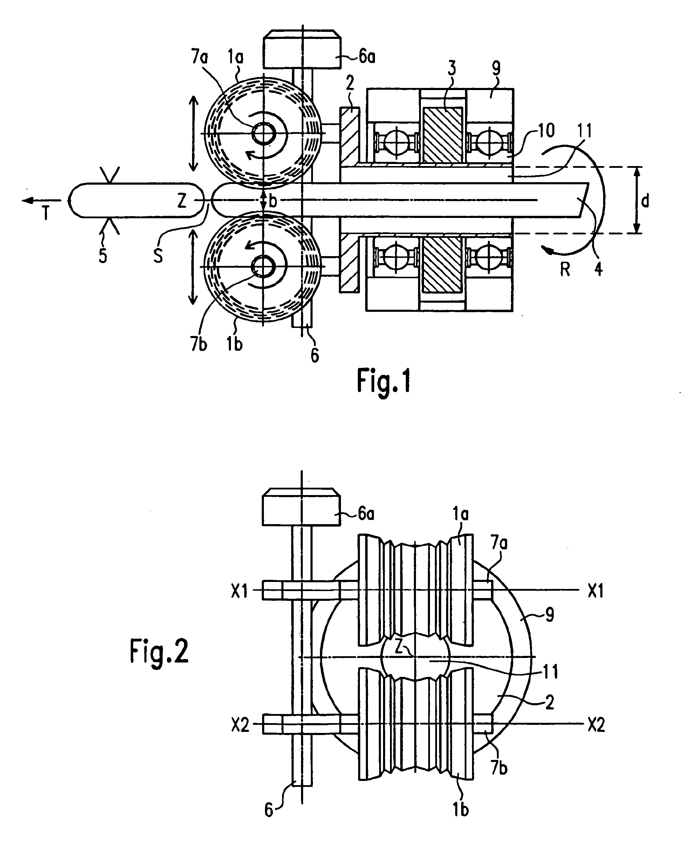

Die Abdrehvorrichtung, die in Figur 3 gezeigt ist, ist in den Figuren 1 und 2 näher dargestellt, wobei die Rollen 1a, b in der Figur 3 um 90° verdreht zu den Rollen in Figur 2 abgebildet sind. Wie aus Figur 1 ersichtlich ist, umfasst die Vorrichtung zum Abteilen eines Wurststrangs mindestens zwei gegenüberliegend voneinander beabstandete Führungselemente 1a und 1b. Hier sind die Führungselemente 1a und 1b zwei gegenüberliegende um den Abstand b voneinander beabstandete drehbar gelagerte Rollen. Die obere Rolle 1a ist drehbar um die Achse X1 gelagert, wobei die untere Rolle 1b drehbar um die Achse X2 gelagert ist. Die Achsen X1 und X2 verlaufen, wie aus den Figuren hervorgeht, im Wesentlichen senkrecht zur Transportrichtung T des gefüllten Wurststrangs 4. Der Abstand b der Rollen 1a, b in der Mitte der Rollen kann an das Wurstkaliber angepasst werden. Vorzugsweise wird der Abstand b derart eingestellt, dass er im Wesentlichen dem Durchmesser des Wurststrangs 4 entspricht oder aber geringfügig kleiner als der Wurststrangdurchmesser ist, um zu gewährleisten, dass, wie nachfolgend beschrieben wird, der Wurststrang 4 zuverlässig durch die Rollen 1a und 1b um eine erste Achse Z, die sich entlang der Transportrichtung T erstreckt, gedreht werden kann. Dies ermöglicht, dass selbst wenn der Abstand der Führungselemente zueinander kleiner als der Außendurchmesser des Wurststrangs 4 eingestellt worden ist, damit der Wurststrang sicher am Außendurchmesser mittels der Führungselemente verdreht werden kann, sich der Wurststrang dennoch in Transportrichtung bewegen kann.

Der Abstand der Rollen kann über eine Einrichtung zum Einstellen des Abstandes der gegenüberliegenden Führungselemente eingestellt werden. In diesem Ausführungsbeispiel ist diese Einrichtung eine Verstellspindel 6 mit einem Verstellgriff 6a. Über diese Verstellspindel kann der Abstand b der Rollen eingestellt werden und darüber hinaus können die Rollen auch zentrisch in Bezug auf das Füllrohrzentrum Z (s. Figur 2) ausgerichtet werden. Die Oberfläche der Rollen 1a, 1b kann mehrere umlaufende Rillen aufweisen, wie in Figur 2 gezeigt ist. Diese Rillen ebenso wie der konkave Querschnitt bewirken, dass der gefüllte Wurststrang beim Verdrehen des Wurststrangs 4 um die Achse Z gut durch die Rollen 1a, b gehalten werden kann, sich jedoch beim Transport der gefüllten Wursthülle in Transportrichtung T gut entlang der Transportrichtung T bewegen kann.

Wie aus Figur 1 ersichtlich ist, sind die um die X1- und X2-Achse drehbar gelagerten Rollen 1a und 1b an einer Einrichtung zum gemeinsamen Verdrehen 2 der Führungselemente 1a, b befestigt. Die Einrichtung zum gemeinsamen Verdrehen 2 der Halteelemente 1a, b umfasst hier eine Hülse 2 an der die Rollen 1a, b befestigt sind. Die Hülse 2 weist hier ein rohrförmiges Teil auf sowie einen sich daran anschließenden Flansch auf dem die Rollen gegenüberliegend befestigt sind. Der Innendurchmesser d der Hülse 2 ist generell größer als das Produktkaliber. Die Hülse 2 ist drehbar um die erste Achse Z in dem Gehäuse 9 über die Lager 10 gelagert. Die Hülse 2 wird über den Antrieb 3 um die Z-Achse gedreht, wodurch ebenfalls die gegenüberliegenden Rollen 1 a und 1b gemeinsam um die Z-Achse, wie durch den Pfeil R dargestellt ist, gedreht werden. Der Hülsenantrieb 3 kann beispielsweise ein Zahnriemenantrieb sein.

Um das Einspringen der Abdrehstelle im Wurststrang an der Stelle S zu erzeugen (s. Figur 1), ist ein System zum Festhalten gegen Verdrehen 5 vorgesehen. Hier sind Systeme wie ein Transportband, das beispielsweise zwei voneinander beabstandete umlaufende Bänder umfasst, die den Wurststrang gegen Verdrehen um die Z-Achse halten, oder zwei voneinander beabstandete umlaufende Transportketten, die den gefüllten Wurststrang 4 gegen Verdrehen um die Z-Achse festhalten oder aber entsprechende voneinander beabstandete drehbare Rollen geeignet. Ebenfalls möglich ist ein manuelles Verfahren, bei dem der Wurststrang 4 von Hand gegen das Verdrehen um die Z-Achse gehalten wird, so dass die Abdrehstelle S entstehen kann. Damit die Abdrehstelle S in Transportrichtung nach den Führungselementen 1a, 1b entstehen kann, ist das System zum Festhalten gegen Verdrehen in Transportrichtung T nach den Führungselementen 1a und 1b angeordnet.

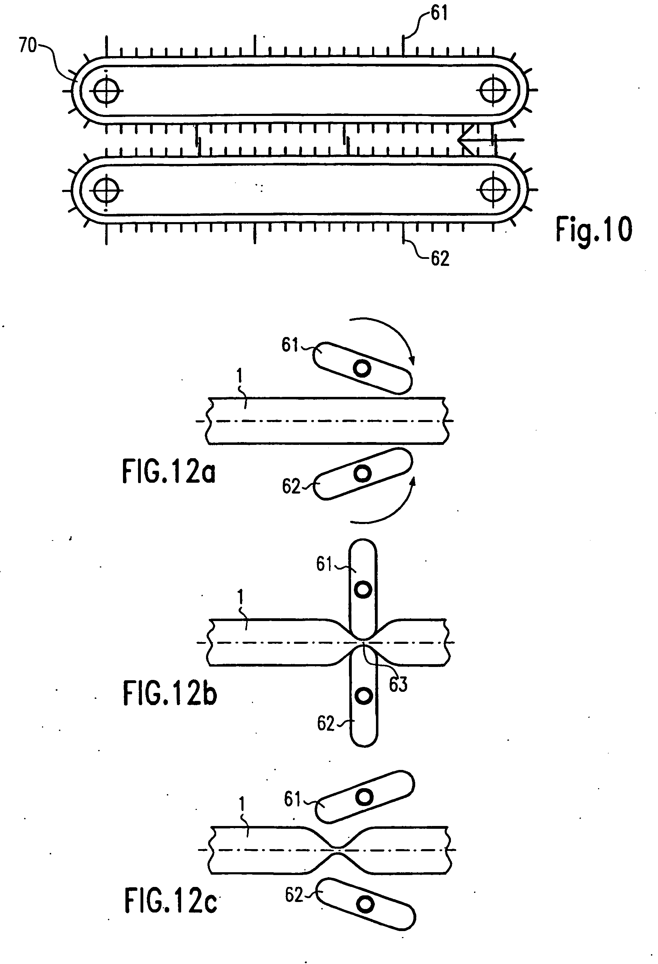

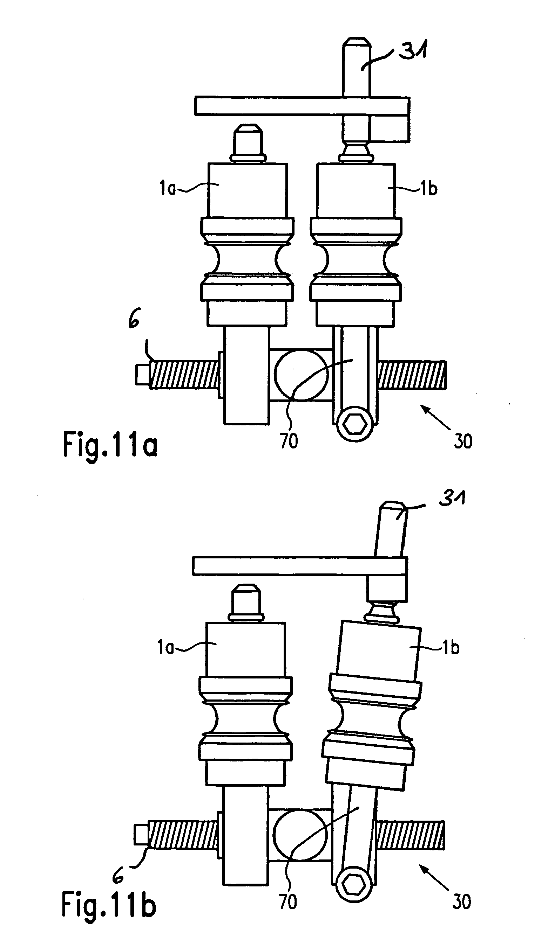

Zur Erzeugung der Abdrehstelle kann, wie in Figur 12a, b c gezeigt, auch in Transportrichtung nach den Führungselementen z. B. den Rollen 1a, 1b hilfsweise eine Verdrängereinheit 61, 62 angeordnet sein, wobei dann die Wursthülle durch Drehung der Rollen 1a, b um die Achse Z auf Torsion vorgespannt wird und die Abdrehstelle S nach Eingriff der Verdrängerelemente 61, 62 an einer in Transportrichtung T genauer definierten Stelle entsteht. Somit können gleichmäßigere Wurstlängen und gleiche Portionsgewichte erzeugt werden. Wie aus Figuren 12a, b, c hervorgeht, weist die Verdrängereinheit zwei drehbar gelagerte Verdrängereinheiten 61, 62 auf, die gegenläufig und synchron arbeiten. Beim Schließen bzw. Eingreifen der Verdrängereinheit 61, 62, wie in Figur 12b gezeigt, wird die Innenmasse gegenüber der verfestigten Außenmasse, d.h. der Wursthüllen verdrängt. Dadurch entsteht eine Lücke im Wurststrang. Um ein Abscheren des Wurststranges zu vermeiden, ist zwischen den geschlossenen Verdrängern 61, 62 ein Spalt 63 vorhanden, wie in Figur 12b zu erkennen ist. Die Größe dieses Spaltes 63 kann einstellbar sein und steht in Abhängigkeit zur Dicke der Hülle. Nach Unterteilung des Produktstranges durch die Bewegung der Verdränger 61, 62 kann sich der abgedreht und dadurch auf Torsion vorgespannte Strang entspannen, indem eine Einschnürung, d.h. die gewünschte Abdrehstelle in die verdrängte Lücke einspringt. Die Länge der Portion ist variabel und wird durch die Ansteuerung des nicht gezeigten Antriebs der Verdrängereinheit 6 bestimmt. Die Anzahl der Abdrehungen ist ebenfalls variabel, wie bereits erwähnt, und wird durch die Ansteuerung des Antriebs für die Einrichtung zum gemeinsamen Verdrehen der Führungselemente um die erste Z-Achse bestimmt. Der gleiche Effekt wird mit einem umlaufenden Kettentransportsystem erzielt, wie es in Figur 10 gezeigt ist. Dabei weist die Transportkette 70 in gleichmäßigen Abständen hervorstehende Verdrängerelemente 61 und 62 auf. Es sind auch andere Verdrängerformen denkbar, z.B. V-förmige ineinandergreifende Verdrängerelemente.

Vor dem Herstellen der Würste wird zunächst über die Spindel 6 der Abstand der Rollen 1a, 1b zueinander derart eingestellt, dass er, wie zuvor beschrieben, an das entsprechende Wurstkaliber angepasst ist und darüber hinaus die Position der Rollen zum Füllrohrzentrum zentriert ist. Nun wird entweder eine am Füllrohr 8 über eine nicht dargestellte Rückhaltevorrichtung gehaltene Wursthülle oder eine von dem Koextrudierkopf 13 erzeugte Wursthülle in bekannter Weise über das Füllrohr 8 mit Wurstbrät befüllt. Wie aus Figur 3 ersichtlich ist, wird der gefüllte Wurststrang durch die Hülse 2 sowie die voneinander beabstandeten Rollen 1a, b in Transportrichtung T gefördert. Der Vorschub des gefüllten Wurststrangs 4 erfolgt beispielsweise über das System zum Festhalten gegen Verdrehen 5, das den gefüllten Wurststrang 4 in Richtung T bewegt. Dadurch, dass die Rollen 1a und 1b um die Achsen X1 und X2 drehbar gelagert sind, drehen sie sich bei Bewegung des gefüllten Wurststrangs 4 in Transportrichtung T um die Achsen X1 und X2 mit, wodurch sich die Oberflächen der Rollen 1a, 1b in Axialrichtung bewegen, so dass der Widerstand zwischen Wurststrangoberfläche und Rollenoberfläche gering gehalten wird, obwohl der Abstand b der Rollen 1a, 1b zueinander derart gewählt wurde, dass der Wurststrang 4 von den Rollen 1a, b mitgenommen und in Z-Achse verdreht werden kann. Das Abdrehen erfolgt durch Drehen der Hülse 2 um die Achse Z, wodurch beide Rollen 1a und 1b ebenfalls gemeinsam um die Achse Z gedreht werden und den Wurststrang 4 ebenfalls um die Achse Z verdrehen. Durch das Verdrehen des Wurststrangs um die Z-Achse mittels der im Kaliber einstellbaren Führungselemente ergibt sich nahezu ein Formschluss, was ein sicheres Verdrehen ermöglicht bei gleichzeitigem schonenden Transport über die drehbar gelagerten Rollen in Transportrichtung. Durch das System 5, das hinter den Rollen 1a, b den Wurststrang 4 festhält, entsteht durch die Drehung der Hülse und der Rollen 1a, 1b die Einschnürstelle S. Beim Abdrehvorgang kann das Füllrohr 8, wie durch den Pfeil D in Figur 3 dargestellt ist, ebenfalls mitgedreht werden.

Das Festhalten gegen Verdrehen kann manuell erfolgen oder auch durch Transportmittel, die zusätzlich zum Weitertransport des Wurststranges beitragen. Wie beschrieben, kann der Vorgang im portionierenden (intermittierenden) Betrieb erfolgen. Bei höheren Ausstoßleistungen der Füllmaschine oder auch bei der produktion mit koextrudierten Wursthüllen, bei denen ein konstanter Füllstrom ausgestoßen wird, kann, wie bereits beschrieben, der Wurststrang 4 auf Torsion vorgespannt werden und mit einer Verdrängereinheit oder Verdrängerketten die Abdrehstelle S erzeugen.

Die Hülse 2 wird solange verdreht bis die erforderliche Abdrehzahl erreicht ist. Der gefüllte Wurststrang 4 wird um eine bestimmte Länge in Transportrichtung T weiterbewegt, die von der gewünschten Wurstlänge abhängt. Danach erfolgt ein erneutes Abdrehen des Wurststrangs durch Drehen der Hülse, wie zuvor beschrieben wurde.

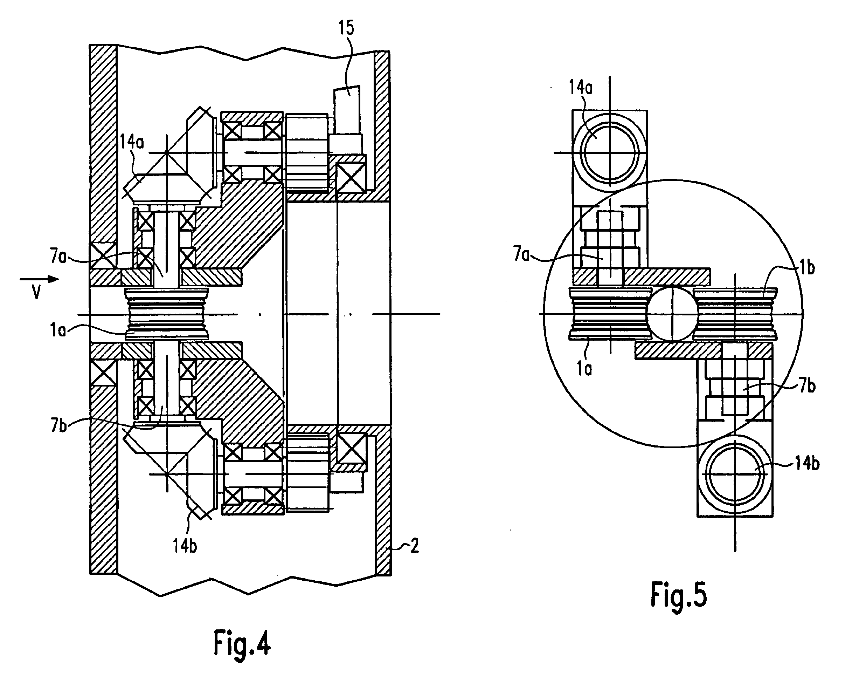

Gemäß einem bevorzugten Ausführungsbeispiel können die Rollen 1a und 1b nicht nur drehbar um Achsen X1, X2 gelagert sein, sondern darüber hinaus über einen Antrieb um die Achsen X1, X2 angetrieben werden, so dass wiederum der Widerstand zwischen Rollenoberfläche und Wurststrang reduziert wird und der Wurststrang darüber hinaus über die Rollen auch in Transportrichtung T bewegt werden kann. Wenn die Rollen 1a, 1b antreibbar sind, kann der Vorschub des Wurststrangs 4 über diese Rollen erfolgen, so dass, wenn beispielsweise manuell gegen das Verdrehen festgehalten wird, kein zusätzlicher Antrieb für den Wurststrang 4 nötig ist. Es müssen jedoch nicht beide Rollen angetrieben werden, sondern es ist durchaus ausreichend nur eine Rolle anzutreiben, wobei die gegenüberliegende Rolle sich dann frei mitdreht. In den Figuren 4 und 5 ist ein Beispiel gezeigt, wie ein solcher Rollenantrieb aussehen kann. Figur 4 zeigt eine Draufsicht auf die in Figur 1 gezeigten Rollen und Figur 5 zeigt eine Vorderansicht der in Figur 4 gezeigten Rollen aus der Richtung V. Wie aus der Figur 4 ersichtlich ist, wird die Rolle 1a, die auf der Welle 7a angeordnet ist, über das Winkelgetriebe 14a über den Antrieb 15 angetrieben. Der Antrieb 15 kann beispielsweise über Zahnriemen erfolgen. Die gegenüberliegende Rolle 1b sitzt auf der Welle 7b und wird über das Winkelbetriebe 14b vom gleichen Antrieb 15 angetrieben. Bei diesem Ausführungsbeispiel kann je ein Antriebsmotor zum Drehen um die Achsen X1 und X2 der Führungselemente, d.h. der Rollen 1a, b vorgesehen sein und für den Antrieb der Einrichtung zum Verdrehen der Führungselemente um die Z-Achse, d.h. zum Verdrehen der Hülse 2 um die Z-Achse vorgesehen sein. Die Antriebsmotoren müssen dann entsprechend synchronisiert sein, um die erforderlichen Parameter, wie Wurstlänge und Abdrehzahl, entsprechend zu regeln. Alternativ dazu kann auch ein Antriebsmotor mit einem Getriebe zur Koppelung beider Bewegungen, d.h. Drehung um die X1-, X2-Achse bzw. Drehung um die Z-Achse vorgesehen sein.

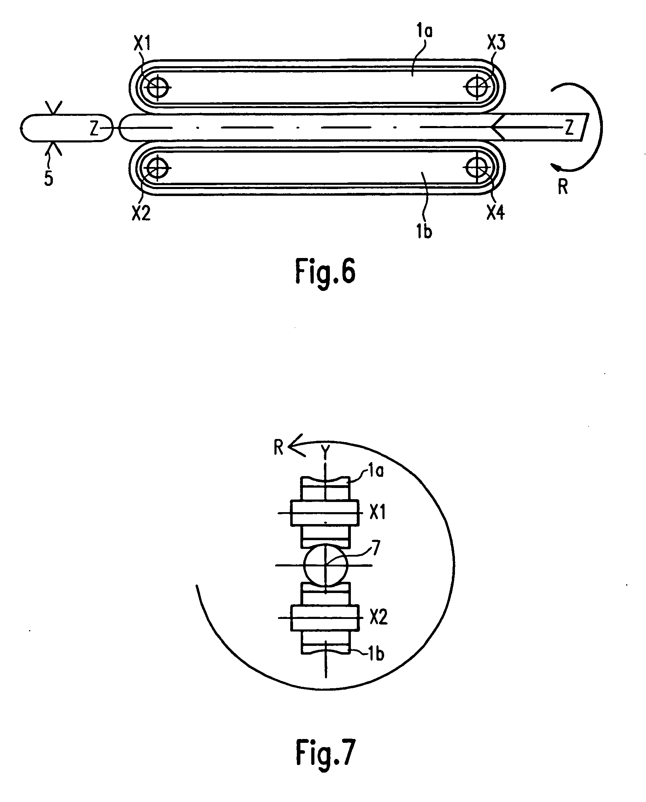

Im Zusammenhang mit den Figuren 1 bis 5 wurde ein Rollenpaar 1a, 1b als Führungselement beschrieben. Die vorliegende Erfindung ist jedoch nicht auf ein derartiges Rollenpaar beschränkt. Als Führungselemente können beispielsweise auch mehrere in Reihe angeordnete Rollenpaare vorgesehen sein, die gemeinsam um die Z-Achse verdreht werden. Alternativ dazu können als Führungselemente beispielsweise auch Gleitflächen mit niedrigem Reibungskoeffizienten verwendet werden, deren Abstand dann, wie zuvor beschrieben, zueinander eingestellt werden kann. Alternativ dazu können auch, wie in Figur 6 und 7 gezeigt, Transportbänder mit Längs- und Drehbewegung eingesetzt werden. Wie aus Figur 6 hervorgeht, werden zwei umlaufende Transportbänder eingesetzt, deren Abstand, wie im Zusammenhang mit den in den Figuren 1 bis 5 gezeigten Beispielen beschrieben, zueinander einstellbar ist und an das Wurstkaliber angepasst werden kann. Auch die Transportbänder drehen sich um eine Achse, die senkrecht zur Transportrichtung T verläuft, so dass sich, ebenso wie die Rollen, auch die Transportbänder in Axialrichtung bewegen, was wiederum den Widerstand zwischen Wurststrang 4 und Bandoberfläche verringert. Die Transportbänder können sich entweder lose drehen und mit der Bewegung des Wurststrangs 4 in Transportrichtung T mitbewegen oder aber auch, wie im Zusammenhang mit den Figuren 1 bis 5 beschrieben, eigens angetrieben werden. Anstatt der Transportbänder können beispielsweise auch entsprechende Transportketten verwendet werden. Die restlichen Merkmale dieser Ausführungsformen entsprechen denen im Zusammenhang mit Figuren 1 bis 5 erläuterten Merkmalen, wobei auf eine Wiederholung dieser Merkmale und Funktionen hier verzichtet wird. Im Zusammenhang mit Figuren 1 und 5 wurde beschrieben, dass die Führungselemente an einer drehbaren Hülse angeordnet sind. Die Vorrichtung muss jedoch nicht zwangsläufig eine drehbare Hülse 2 aufweisen sondern lediglich eine Einrichtung, die sicherstellt, dass die gegenüberliegenden Führungselemente gemeinsam um die Achse Z verdreht werden.

Der Antrieb des Füllrohrs kann zum Antrieb 3 der Einrichtung zum gemeinsamen Verdrehen der Führungselemente synchronisiert sein. Vorzugsweise werden die beiden Einheiten von einem Antrieb, ggf. über ein Getriebe gekoppelt angetrieben.

Wenn angetriebene Führungselemente, d.h. Führungselemente die sich ebenfalls in Z-Achsenrichtung, d.h. Transportrichtung, bewegen, wie etwa angetriebene Rollen, Transportbänder oder -ketten eingesetzt werden, erübrigt sich ein weiterer Antrieb für den Wurststrang 4 in Transportrichtung.

Die erfindungsgemäße Vorrichtung kann weiter eine Steuereinrichtung umfassen, die die Funktionen der Fülleinheit, wie beispielsweise Füllmenge, Füllgeschwindigkeit zu den Funktionen der Abdrehvorrichtung, d.h. z.B. Drehgeschwindigkeit der Einrichtung zum gemeinsamen Verdrehen der Führungselemente 1a, b sowie die Transportgeschwindigkeit des gefüllten Wurststrangs und ggf. die Taktfrequenz steuert um eine bestimmte Wurstlänge und Abdrehzahl zu erzielen.

Die Figur 11 zeigt schematisch eine weitere Ausführungsform der Führungselemente gemäß der vorliegenden Erfindung. Wie bereits zuvor beschrieben, wird der Abstand der Führungselemente zueinander derart eingestellt, dass er kleiner als der Außendurchmesser des Wurststranges ist, damit der Wurststrang durch die Führungselemente um die Z-Achse verdreht werden kann. Dabei besteht am Anfang des Stranges das Problem, dass der weiche Wurststrang nur schwer zwischen den Führungselementen z.B. den Rollen einzufädeln ist bzw. zurückgestaut wird. Deshalb sind die Führungselemente bei Beginn der Produktion zunächst etwas weiter einzustellen und nachdem der Wurststrang durch die Führungselemente 1a, b durchgeführt ist, kann eine engere Einstellung wieder vorgenommen werden. Dies bringt jedoch mit sich, dass die Produktion nochmals unterbrochen werden muss, um die Einstellung zu verändern und der Anfang des Wurststrangs wegen der veränderten Produktion nicht verändert werden kann.

Alternativ dazu wird die Ausführungsform, wie sie in den Figuren 11a, b gezeigt ist, verwendet. Diese Ausführungsform entspricht im Wesentlichen den in den Figuren 1 bis 10 gezeigten Ausführungsformen, weist jedoch weiter eine Einrichtung 30 auf, bei der zumindest eine Rollenachse 70 schwenkbar angeordnet ist und die ein oder beide Führungselemente 1a, b mit Federkraft auf das eingestellte Kaliber hält. Vor dem Produktionsstart kann ein oder mehrere Führungselemente 1a, b entgegen der Federkraft gespreizt und ggf. eingerastet werden. Nach dem Einfädeln des Wurststrangs 4 bei Produktionsbeginn wird diese Rasterung beispielsweise durch einen am Gehäuse befestigten Hebel 31 aufgehoben und die Führungselemente 1a, b springen wieder in die für das Wurstkaliber eingestellte Position, so dass keine Unterbrechung der Produktion erforderlich ist.

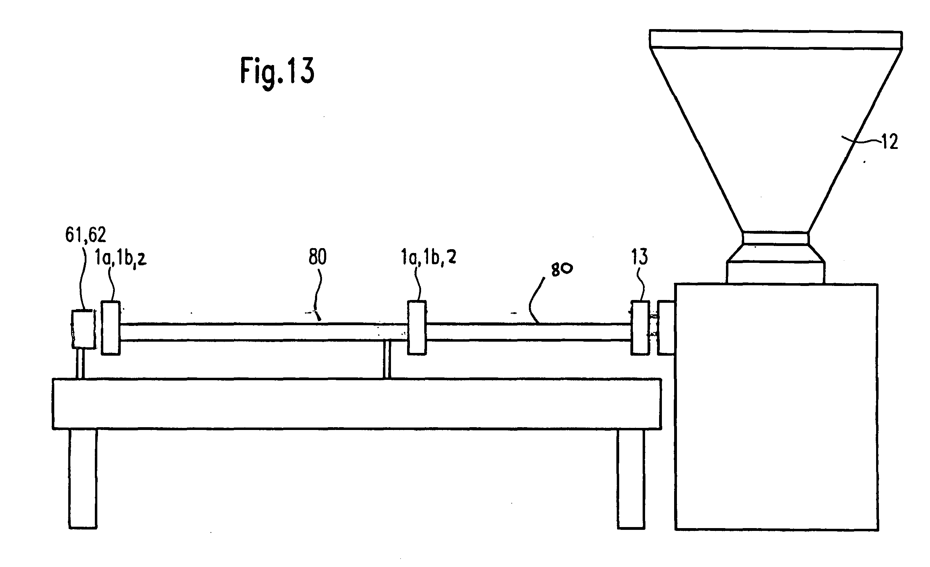

Figur 13 zeigt eine weitere Ausführungsform der vorliegenden Erfindung bei der mehrere erfindungsgemäße Vorrichtungen (Einheiten von gegenüberliegenden voneinander beabstandeten Führungselementen 1a, b, die gemeinsam um die Z-Achse verdreht werden) hintereinander in Transportrichtung angeordnet sind und vorzugsweise synchron zueinander angetrieben werden, wie zuvor beschrieben wurde. Der Abstand solcher Einheiten liegt in einem Bereich von 10 cm bis 250 cm. Das Anordnen von mehreren Einheiten 1a, b hintereinander bringt den Vorteil mit sich, dass insbesondere bei koextrudierten Wursthüllen die noch nicht ausgehärtete Wursthülle nicht abreißt. Wie aus Figur 13 hervorgeht, ist zwischen den beiden Einheiten eine Führung, hier eine Führungsrinne 80, vorgesehen. In Transportrichtung nach der letzten, hier der zweiten Einheit mit den entsprechenden Führungselementen 1a, b ist, wie zuvor beschrieben, beispielsweise eine Verdrängereinheit mit entsprechenden Verdrängerelementen 61, 62 angeordnet.

Bei den oben gezeigten Ausführungsbeispielen waren jeweils in Bezug auf die Z-Achse gegenüberliegende Führungselemente 1a, b beschrieben. Dabei können z.B. mindestens zwei gegenüberliegende Führungselemente in Transportrichtung angeordnet sein. Der Ausdruck mindestens zwei gegenüberliegende Führungselemente schließt jedoch auch Ausführungsformen ein, bei denen mehrere Führungselemente um einen bestimmten Winkel versetzt um die Z-Achse angeordnet sind, z.B. 3 Führungselemente, die um ca. 120° versetzt zur Z-Achse angeordnet sind.

## Patentansprüche

1. Vorrichtung zum Abteilen eines Wurststrangs mit:
- mindestens zwei gegenüberliegenden voneinander beabstandeten Führungselementen (1a, b), deren Abstand (b) derart an ein Wurstkaliber anpassbar ist, dass sich der gefüllte Wurststrang (4) zwischen den Führungselementen (1a, b) in Transportrichtung entlang einer ersten Achse (Z-Achse) hindurch bewegen kann, **dadurch gekennzeichnet, daß** der gefüllte Wurststrang von den Führungselementen (1a, b) um diese erste Achse (Z-Achse) verdreht werden kann, und mit
- einer Einrichtung (2, 3) zum gemeinsamen Verdrehen der Führungselemente (1a, b) um die erste Achse (Z-Achse).

2. Vorrichtung nach Anspruch 1,
**dadurch gekennzeichnet, dass**
wenigstens ein Führungselement (1a, b) um eine zweite Achse (X1-, X2-Achse) senkrecht zur ersten Achse (Z-Achse) drehbar gelagert ist.

3. Vorrichtung nach mindestens einem der Ansprüche 1 oder 2,
**dadurch gekennzeichnet, dass**
die Vorrichtung weiter eine Einrichtung umfasst, die mindestens ein Führungselement (1a, b) mit Federkraft auf ein eingestelltes Kaliber hält.

4. Vorrichtung nach mindestens einem der Ansprüche 1 bis 2,
**dadurch gekennzeichnet, dass**
die Vorrichtung weiter einen Antrieb (15) für die Führungselemente (1a, b) umfasst, um mindestens eines der Führungselemente (1a, b) um die zweite Achse (X1-, X2-Achse) zu drehen.

5. Vorrichtung nach mindestens einem der vorherigen Ansprüche,
**dadurch gekennzeichnet, dass**
die Vorrichtung eine Einrichtung (6) zum Einstellen des Abstands (b) der gegenüberliegenden Führungselemente (1a, b) zueinander und zum zentrischen Ausrichten der gegenüberliegenden Führungselemente (1a, b) in Bezug auf das Füllrohr (8) aufweist.

6. Vorrichtung nach Anspruch 5,
**dadurch gekennzeichnet, dass**
die Einrichtung (6) zum Einstellen des Abstandes (b) der gegenüberliegenden Führungselemente (1a, b) eine Verstellspindel (6) umfasst zum Einstellen der Position der Führungselemente zueinander.

7. Vorrichtung nach mindestens einem der Ansprüche 1 bis 6,
**dadurch gekennzeichnet, dass**
die Einrichtung (2, 3) zum gemeinsamen Verdrehen der Führungselemente (1a, b) um die erste Achse eine angetriebene Hülse (2) umfasst, die drehbar um die erste Achse (Z-Achse) gelagert ist, und auf der die Führungselemente (1a, b) gegenüberliegend befestigt sind, so dass sie sich mit der Hülse (2) um die erste Achse (Z-Achse) drehen.

8. Vorrichtung nach mindestens einem der Ansprüche 1 bis 7,
**dadurch gekennzeichnet, dass**
die Führungselemente (1a, b) Rollen und/oder umlaufende Transportbänder und/oder umlaufende Transportketten und/oder Gleitflächen umfassen.

9. Vorrichtung nach mindestens einem der Patentansprüche 1 bis 8,
**dadurch gekennzeichnet, dass**
die Vorrichtung weiter eine Einrichtung (5) zum Festhalten des gefülllten Wurststrangs (4) umfasst, die in Transportrichtung (T) hinter den Führungselementen (1a, b) angeordnet ist.

10. Vorrichtung nach Anspruch 9,
**dadurch gekennzeichnet, dass**
die Vorrichtung weiter in Transportrichtung nach den Führungselementen (1a, b) eine Verdrängereinheit mit Verdrängerelementen (61, 62) zur Herstellung der Abdrehstelle umfasst.

11. Vorrichtung zur Wurstherstellung mit einer Fülleinheit (16)
- mit einem Füllrohr (8) zum Befüllen von Wursthüllen und
- mit einer Einrichtung zum Abteilen eines Wurststrangs nach mindestens einem der Patentansprüche 1 bis 10, die in Transportrichtung (T) hinter dem Füllrohr (8) angeordnet ist.

12. Vorrichtung zur Wurstherstellung nach Anspruch 11,
**dadurch gekennzeichnet, dass**
das Füllrohr (8) um die erste Achse (Z-Achse) drehbar ist und der Antrieb für das Füllrohr zu dem Antrieb (3) der Einrichtung (2, 3) zum Drehen der Führungselemente (1a, 1b) synchronisiert ist.

13. Vorrichtung zur Wurstherstellung nach mindestens einem der Ansprüche 11 oder 12,
**dadurch gekennzeichnet, dass**
die Vorrichtung weiter einen Koextrudierkopf (13) umfasst zur Herstellung einer koextrudierten Wursthülle.

14. Vorrichtung zur Wurstherstellung nach mindestens einem der Ansprüche 11 bis 13,
**dadurch gekennzeichnet, dass**
mindestens zwei voneinander beabstandete Vorrichtungen zum Abteilen eines Wurststrangs in Transportrichtung hintereinander angeordnet sind.

15. Verfahren zum Abteilen eines Wurststrangs (4) mit folgenden Schritten:
- Füllen eines Wurststrangs (4) mit einem Füllrohr (8) einer Fülleinheit (16),
- Durchführen des gefüllten Wurststrangs (4) in Transportrichtung (T) durch mindestens zwei gegenüberliegende voneinander beabstandete Führungselemente (1a, b) deren Abstand an das Wurstkaliber angepasst ist, so dass sich der Wurststrang zwischen den Führungselementen in Transportrichtung entlang einer ersten Achse (Z-Achse) hindurch bewegen kann, **gekennzeichnet durch**
- Verdrehen der Führungselemente (1a, b) um die erste Achse, wodurch der gefüllte Wurststrang (4) ebenfalls um die erste Achse verdreht wird, und
- Gegenhalten des gefüllten Wurststrangs (4) an einer Stelle in Transportrichtung (T) hinter den Führungselementen (1a, b) während der gefüllte Wurststrang (4) um die erste Achse verdreht wird.

16. Verfahren nach Anspruch 15,
**dadurch gekennzeichnet, dass**
das Füllrohr (8) während des Verdrehens der Führungselemente (1a, b) gedreht wird.

17. Verfahren nach Anspruch 15, wobei sich wenigstens eines der Führungselemente (1a, b) beim Transport des gefüllten Wurststrangs (4) in Transportrichtung (T) mitbewegt.

18. Verfahren nach einem der Ansprüche 15 bis 17, wobei wenigstens ein Führungselement (1a, b) beim Transport des gefüllten Wurststrangs (4) in Transportrichtung (T) angetrieben wird, so dass es sich um eine zweite Achse senkrecht zur ersten Achse dreht.

19. Verfahren nach mindestens einem der Ansprüche 15 bis 18,
**dadurch gekennzeichnet, dass**
vor dem Befüllen des Wurststrangs (4) der Abstand zwischen den Führungselementen an das Wurstkaliber angepasst wird.

20. Verfahren nach mindestens einem der Ansprüche 15 bis 19,
**dadurch gekennzeichnet, dass**
die gegenüberliegenden Führungselemente (1a, b) zentrisch in Bezug auf das Füllrohr (8) ausgerichtet werden.

21. Verfahren nach Anspruch 18,
**dadurch gekennzeichnet, dass**
ein Antrieb zum Verdrehen der Führungselemente (1a, b) um die erste Achse mit dem Antrieb zum Verdrehen der Führungselemente (1a, b) um die zweite Achse synchronisiert ist.

22. Verfahren nach Anspruch 16 oder 21,
**dadurch gekennzeichnet, dass**
der Antrieb zum Verdrehen der Führungselemente (1a, b) um die erste Achse zum Antrieb des Füllrohrs (8) synchronisiert ist.

23. Verfahren nach mindestens einem der Ansprüche 15 bis 22,
**dadurch gekennzeichnet, dass**
der Abstand der Führungselemente erst größer als der Wurststrangdurchmesser eingestellt wird, das Wurststrangende durchgeführt, und dann der Abstand der Führungselemente kleiner oder gleich dem Wurststrangdurchmesser eingestellt wird.

24. Verfahren nach mindestens einem der Ansprüche 15 und 23,
**dadurch gekennzeichnet, dass**
die Hülle des Wurststranges von einem Koextrudierkopf 13 während des Füllens extrudiert wird.

## Claims

1. An apparatus for dividing a sausage strand comprising:
- at least two opposite spaced-apart guide elements (1a, b) having a distance (b) which can be adapted to a sausage caliber such that the filled sausage strand (4) can be moved between and through the guide elements (1a, b) in transportation direction along a first axis (Z axis), **characterized in that** the filled sausage strand can be rotated by the guide elements (1a, b) about said first axis (Z axis), and comprising
- a means (2, 3) for jointly rotating the guide elements (1a, b) about the first axis (Z axis).

2. The apparatus according to claim 1,
**characterized in that**
at least one guide element (1a, b) is rotatably supported about a second axis (X1, X2 axis) perpendicular to the first axis (Z axis).

3. The apparatus according to at least one of claims 1 or 2,
**characterized in that**
the apparatus further comprises a means which holds at least one guide element (1a, b) with a resilient force at a set caliber.

4. The apparatus according to at least one of claims 1 to 2,
**characterized in that**
the apparatus further comprises a drive (15) for the guide elements(1a, b) to rotate at least one of the guide elements (1a, b) about the second axis (X1, X2 axis).

5. The apparatus according to at least one of the preceding claims,
**characterized in that**
the apparatus comprises a means (6) for adjusting the distance (b) of the opposite guide elements (1a, b) relative to one another and for centrally aligning the opposite guide elements (1a, b) relative to the filling tube (8).

6. The apparatus according to claim 5,
**characterized in that**
the means (6) for adjusting the distance (b) of the opposite guide elements (1a, b) comprises an adjustment spindle (6) for adjusting the position of the guide elements relative to one another.

7. The apparatus according to at least one of claims 1 to 6,
**characterized in that**
the means (2, 3) for jointly rotating the guide elements (1a, b) about the first axis comprises a driven sleeve (2) which is rotatably supported about the first axis (Z axis) and on which the guide elements (1a, b) are secured opposite each other so that they rotate with the sleeve (2) about the first axis (Z axis).

8. The apparatus according to at least one of claims 1 to 7,
**characterized in that**
the guide elements (1a, b) comprise rollers and/or endless conveyor belts and/or endless transportation chains and/or slide surfaces.

9. The apparatus according to at least one of patent claims 1 to 8,
**characterized in that**
the apparatus further comprises a means (5) for retaining the filled sausage strand (4) said means being arranged in transportation direction (T) behind the guide elements (1a, b).

10. The apparatus according to claim 9,
**characterized in that**
further in transportation direction after the guide elements (1a, b) the apparatus comprises a displacer unit with displacer elements (61, 62) for producing the twist-off location.

11. An apparatus for making sausage with a filling unit (16), comprising
- a filling tube (8) for filling sausage casings, and
- a means for dividing a sausage strand according to at least one of patent claims 1 to 10, which is arranged in transportation direction (T) behind the filling tube (8).

12. The apparatus for making sausage according to claim 11,
**characterized in that**
the filling tube (8) is rotatable about the first axis (Z axis) and the drive for the filling tube is synchronized with the drive (3) of the means (2, 3) for rotating the guide elements (1a, 1b).

13. The apparatus for making sausage according to at least one of claims 11 or 12,
**characterized in that**
the apparatus further comprises a coextrusion head (13) for producing a co-extruded sausage casing.

14. The apparatus for making sausage according to at least one of claims 11 to 13,
**characterized in that**
at least two spaced-apart apparatuses are arranged one after the other in transportation direction for dividing a sausage strand.

15. A method for dividing a sausage strand (4), comprising the following steps:
- filling a sausage strand (4) with a filling tube (8) of a filling unit (16),
- guiding the filled sausage strand (4) in transportation direction (T) through at least two opposite spaced-apart guide elements (1a, b) whose distance is adapted to the sausage caliber, so that the sausage strand can move between the guide elements in transportation direction along a first axis (Z axis), **characterized by**
- rotating the guide elements (1a, b) about the first axis, whereby the filled sausage strand (4) is also rotated about the first axis, and
- supporting the filled sausage strand (4) at a place in transportation direction (T) behind the guide elements (1a, b) while the filled sausage strand (4) is being rotated about the first axis.

16. The method according to claim 15,
**characterized in that**
the filling tube (8) is rotated during rotation of the guide elements (1a, b).

17. The method according to claim 15, wherein at least one of the guide elements (1a, b) is moved along during transportation of the filled sausage strand (4) in transportation direction (T).

18. The method according to any one of claims 15 to 17, wherein at least one guide element (1a, b) is driven during transportation of the filled sausage strand (4) in transportation direction (T) so that it rotates about a second axis perpendicular to the first axis.

19. The method according to at least one of claims 15 to 18,
**characterized in that**
prior to the filling of the sausage strand (4) the distance between the guide elements is adapted to the sausage caliber.

20. The method according to at least one of claims 15 to 19,
**characterized in that**
the opposite guide elements (1a, b) are centrally aligned relative to the filling tube (8).

21. The method according to claim 18,
**characterized in that**
a drive for rotating the guide elements (1a, b) about the first axis is synchronized with the drive for rotating the guide elements (1a, b) about the second axis.

22. The method according to claim 16 or 21,
**characterized in that**
the drive for rotating the guide elements (1a, b) about the first axis is synchronized with the drive of the filling tube (8).

23. The method according to at least one of claims 15 to 22,
**characterized in that**
the distance of the guide elements is first adjusted to be larger than the sausage strand diameter, the sausage strand end is passed therethrough, and the distance of the guide elements is then set to be smaller than or equal to the sausage strand diameter.

24. The method according to at least one of claims 15 and 23,
**characterized in that**
the casing of the sausage strand is extruded from a coextrusion head 13 during filling.

## Revendications

1. Dispositif pour diviser un cordon de saucisse comportant :
- au moins deux éléments de guidage (1a, b) en vis-à-vis et distants l'un de l'autre, dont l'écartement (b) peut être adapté à un calibre de saucisse, de façon à ce que le cordon de saucisse rempli (4) puisse se déplacer entre les éléments de guidage (1a, b) dans la direction de transport le long d'un premier axe (axe Z), **caractérisé en ce que** le cordon de saucisse rempli peut être tourné autour de ce premier axe (axe Z) par les éléments de guidage (1a, b), et comportant
- un équipement (2, 3) pour faire tourner ensemble les éléments de guidage (1a, b) autour du premier axe (axe Z).

2. Dispositif selon la revendication 1,
**caractérisé en ce que**
au moins un élément de guidage (1a, b) est supporté pour tourner autour d'un second axe (axe X1, X2) perpendiculaire au premier axe (axe Z).

3. Dispositif selon l'une au moins des revendications 1 ou 2,
**caractérisé en ce que**
le dispositif comprend en outre un équipement qui maintient au moins un élément de guidage (1a, b) avec une force de ressort, à un calibre réglé.

4. Dispositif selon l'une au moins des revendications 1 à 2,
**caractérisé en ce que**
le dispositif comprend en outre un entraînement (15) pour les éléments de guidage (1a, b), pour faire tourner au moins l'un des éléments de guidage (1a, b) autour du second axe (axe X1, X2) .

5. Dispositif selon l'une au moins des revendications précédentes,
**caractérisé en ce que**
le dispositif présente un équipement (6) pour régler l'écartement (b) l'un par rapport à l'autre des éléments de guidage (1a, b) situés en vis-à-vis l'un de l'autre, et pour centrer les éléments de guidage (1a, b) par rapport au tube de remplissage (8).

6. Dispositif selon la revendication 5,
**caractérisé en ce que**
l'équipement (6) pour régler l'écartement (b) des éléments de guidage (1a, b) situés en vis-à-vis l'un de l'autre, comprend une broche de réglage (6) pour régler la position des éléments de guidage l'un par rapport à l'autre.

7. Dispositif selon l'une au moins des revendications 1 à 6,
**caractérisé en ce que**
l'équipement (2, 3), pour faire tourner ensemble les éléments de guidage (1a, b) autour du premier axe, comprend une douille entraînée (2) qui est supportée pour tourner autour du premier axe (axe Z) et sur laquelle les éléments de guidage (1a, b) sont fixés en vis-à-vis l'un de l'autre, de sorte qu'ils tournent avec la douille (2) autour du premier axe (axe Z).

8. Dispositif selon l'une au moins des revendications 1 à 7,
**caractérisé en ce que**
au moins les éléments de guidage (1a, b) comportent des rouleaux et/ou des bandes transporteuses sans fin et/ou des chaînes transporteuses sans fin et/ou des surfaces de glissement.

9. Dispositif selon l'une au moins des revendications 1 à 8,
**caractérisé en ce que**
le dispositif comprend en outre un équipement (5) pour maintenir fermement le cordon de saucisse rempli (4), qui, dans la direction de transport (T), est disposé en aval des éléments de guidage (1a, b).

10. Dispositif selon la revendication 9,
**caractérisé en ce que**
le dispositif comprend en outre, dans la direction de transport, en aval des éléments de guidage (1a, b), une unité repoussoir dotée d'éléments repousseurs (61, 62) pour réaliser le point de torsion.

11. Dispositif pour la fabrication de saucisses comportant une unité de remplissage (16),
- comportant un tube de remplissage (8) pour remplir des enveloppes de saucisse et
- comportant un équipement pour diviser un cordon de saucisse selon l'une au moins des revendications 1 à 10, qui, dans la direction de transport (T), est disposé en aval du tube de remplissage (8).

12. Dispositif selon la revendication 11,
**caractérisé en ce que**
le tube de remplissage (8) est capable de tourner autour du premier axe (axe Z) et l'entraînement destiné au tube de remplissage est synchronisé avec l'entraînement (3) de l'équipement (2, 3) pour faire tourner les éléments de guidage (1a, b).

13. Dispositif selon l'une au moins des revendications 11 ou 12,
**caractérisé en ce que**
le dispositif comprend par ailleurs une tête de coextrusion (13) pour fabriquer une enveloppe de saucisse coextrudée.

14. Dispositif selon l'une au moins des revendications 11 à 13,
**caractérisé en ce que**
au moins deux équipements distants l'un de l'autre sont disposés l'un en aval de l'autre pour diviser un cordon de saucisse dans la direction de transport.

15. Procédé pour diviser un cordon de saucisse (4) comportant les étapes suivantes :
- remplir un cordon de saucisse (4) avec un tube de remplissage (8) d'une unité de remplissage (16),
- transporter le cordon de saucisse rempli (4) dans la direction de transport (T) à travers au moins deux éléments de guidage (1a, b) distants et en vis-à-vis l'un de l'autre, dont l'écartement est adapté au calibre de saucisse de façon telle que le cordon de saucisse peut se déplacer entre les éléments de guidage (1a, b) dans la direction de transport, le long d'un premier axe (axe Z), **caractérisé par**
- la rotation des éléments de guidage (1a, b) autour du premier axe, grâce à quoi le cordon de saucisse rempli (4) tourne également autour du premier axe, et
- le contre-maintien du cordon de saucisse rempli (4) en un point, situé en aval des éléments de guidage (1a, b) dans la direction de transport, tandis que le cordon de saucisse rempli (4) est tourné autour du premier axe.

16. Procédé selon la revendication 15,
**caractérisé en ce que**
le tube de remplissage (8) est tourné pendant la rotation des éléments de guidage (1a, b).

17. Procédé selon la revendication 15, dans lequel au moins l'un des éléments de guidage (1a, b) se déplace également lors du transport du cordon de saucisse rempli (4) dans la direction de transport (T).

18. Procédé selon l'une des revendications 15 à 17, dans lequel au moins l'un des éléments de guidage (1a, b) est entraîné également lors du transport du cordon de saucisse rempli (4) dans la direction de transport (T), de telle façon qu'il tourne autour d'un second axe, perpendiculaire au premier axe.

19. Procédé selon l'une au moins des revendications 15 à 18,
**caractérisé en ce que**
l'écartement entre les éléments de guidage est adapté au calibre de saucisse avant le remplissage du cordon de saucisse (4).

20. Procédé selon l'une au moins des revendications 15 à 19,
**caractérisé en ce que**
les éléments de guidage (1a, b) situés en vis-à-vis l'un de l'autre sont orientés de manière centrée par rapport au tube de remplissage (8).

21. Procédé selon la revendication 18,
**caractérisé en ce que**
un entraînement pour faire tourner les éléments de guidage (1a, b) autour du premier axe est synchronisé avec l'entraînement pour faire tourner les éléments de guidage (1a, b) autour du second axe.

22. Procédé selon la revendication 16 ou 21,
**caractérisé en ce que**
l'entraînement pour faire tourner les éléments de guidage (1a, b) autour du premier axe est synchronisé par rapport à l'entraînement du tube de remplissage (8).

23. Procédé selon l'une au moins des revendications 15 à 22,
**caractérisé en ce que**
l'écartement des éléments de guidage est tout d'abord réglé plus grand que le diamètre du cordon de saucisse, l'extrémité du cordon de saucisse est réalisée, et ensuite l'écartement des éléments de guidage est réglé plus petit ou égal au diamètre du cordon de saucisse.

24. Procédé selon l'une au moins des revendications 15 et 23,
**caractérisé en ce que**
l'enveloppe du cordon de saucisse est extrudée pendant le remplissage, à partir d'une tête de coextrusion 13.
